# EUROPÄISCHE PATENTSCHRIFT

(11) **EP 3 891 041 B1**
(45) Veröffentlichungstag und Bekanntmachung des Hinweises auf die Patenterteilung: **05.10.2022**
(21) Anmeldenummer: 19817983.0
(22) Anmeldetag: 02.12.2019
(51) Int. Cl.: B62D 1/184

(54) **SPANNVORRICHTUNG FÜR EINE LENKSÄULE UND LENKSÄULE FÜR EIN KRAFTFAHRZEUG**
CLAMPING APPARATUS FOR A STEERING COLUMN AND STEERING COLUMN FOR A MOTOR VEHICLE
DISPOSITIF DE SERRAGE POUR UNE COLONNE DE DIRECTION ET COLONNE DE DIRECTION POUR UN VÉHICULE À MOTEUR

(30) Priorität: 03.12.2018 DE 102018220847
(43) Veröffentlichungstag der Anmeldung: 13.10.2021
(73) Patentinhaber: thyssenkrupp Presta AG, 9492 Eschen (LI); thyssenkrupp AG, 45143 Essen (DE)
(72) Erfinder: RIST, Sascha, 6971 Hard (AT); FLEISCHER, Martin, 9436 Balgach (CH); GEISELBERGER, Thomas, 9014 St. Gallen (CH); AGBOR, Thomas, 66424 Homburg (DE)
(74) Vertreter: thyssenkrupp Intellectual Property GmbH
(86) Internationale Anmeldenummer: PCT/EP2019/083264
(87) Internationale Veröffentlichungsnummer: WO 2020/114951

(56) Entgegenhaltungen:
- EP-A1- 0 606 085
- WO-A1-2018/069224
- DE-A1-102007 033 959

## Beschreibung

### Stand der Technik

Die Erfindung betrifft eine Spannvorrichtung für eine Lenksäule, umfassend eine um eine Spannachse drehbare Hubscheibe, die über ein erstes Hubgetriebe und mindestens ein zweites Hubgetriebe mit einer relativ zur Drehung der Hubscheibe feststehenden Druckscheibe verbunden ist, wobei das erste Hubgetriebe ausgebildet ist zur Umsetzung einer relativen Drehung der Hubscheibe in Spannrichtung in einem ersten Betätigungswinkelbereich in einen ersten axialen Hub relativ zur Druckscheibe, und das zweite Hubgetriebe ausgebildet ist zur Umsetzung einer auf den ersten Betätigungswinkelbereich folgenden weiteren Drehung der Hubscheibe in einem zweiten Betätigungswinkelbereich in einen zweiten axialen Hub zwischen Hubscheibe und Druckscheibe

Bei verstellbaren Lenksäulen für Kraftfahrzeuge ist die Lenkspindel, an deren bezogen auf die Fahrtrichtung hinteren Ende das Lenkrad angebracht ist, in einer Stelleinheit drehbar gelagert, die zur Einstellung der Lenkradposition relativ zur Fahrzeugkarosserie positioniert und fixiert werden kann.

An der Fahrzeugkarosserie ist eine Trageinheit der Lenksäule fest angebracht, an der die Stelleinheit mittels einer lösbaren Spanneinrichtung festlegbar ist. Die Spanneinrichtung kann durch eine manuelle oder motorische Betätigung wahlweise in eine Klemm- bzw. Fixierstellung oder Löse- bzw. Freigabestellung gebracht werden. In der Lösestellung kann die Stelleinheit relativ zur Trageinheit verstellt werden, und in der Fixierstellung ist die Stelleinheit positionsfest mit der Trageinheit verspannt. Zur Fixierung wird eine Betätigungsbewegung in Feststellrichtung, eine Feststell- oder Fixierbewegung, durch ein Hubgetriebe der Spanneinrichtung in einen Hub, nämlich einen Klemm- oder Spannhub, umgesetzt, wodurch eine Klemmkraft ausgeübt wird, mit der die Stelleinheit und die Trageinheit gegeneinander verspannt werden. Durch entgegengesetzte Betätigung in Löserichtung wird die Klemmkraft aufgehoben.

In einer beispielsweise aus der DE 10 2016 220 003 A1 bekannten Bauform ist ein Hubgetriebe zwischen einer Hubscheibe und einer Druckscheibe ausgebildet, die axial aufeinander folgend auf einer Spannachse angeordnet sind. Zur Betätigung wird die Hubscheibe relativ zur Druckscheibe um die Spannachse verdreht, wobei zur Fixierung eine relative Verdrehung um einen Betätigungswinkel in Feststellrichtung erfolgt, welche in einem Hubgetriebe umgesetzt wird in einen axialen Hub, wobei der axiale Abstand zwischen Hubund Druckscheibe vergrößert wird. Durch den Hub werden beispielsweise gabelartig vorstehenden Seitenwangen einer Trageinheit gegeneinander bewegt, so dass eine zwischen den Seitenwangen angeordnete Stelleinheit eingespannt und dadurch fixiert wird. Zum erfolgt die relative Drehung in entgegengesetzter Richtung, wodurch die Hubscheibe relativ zur Druckscheibe abgesenkt wird.

In der gattungsgemäßen DE 10 2007 033 959 A1 wird beschrieben, zur Optimierung der Spannfunktion zwischen der Hubscheibe und der Druckscheibe ein erstes und ein zweites Hubgetriebe anzuordnen. Durch die beiden Hubgetriebe wird eine zweistufige Anordnung mit zwei in Reihe wirksamen Klemmstufen realisiert. Bei einer Betätigung zur Fixierung wird eine Drehung in einem ersten Betätigungswinkelbereich vom ersten Hubgetriebe umgesetzt in einen ersten axialen Hub, und durch weitere Drehung in einem darauf folgenden zweiten Betätigungswinkelbereich in einen an den ersten Hub anschließenden zweiten Hub. Das erste Hubgetriebe hat ein erstes Übersetzungsverhältnis, welches das Verhältnis der am Ausgang durch den Hub ausgeübten Klemmkraft zur eigeleiteten Betätigungskraft angibt, das kleiner ist als das zweite Übersetzungsverhältnis des zweiten Hubgetriebes. Beim Feststellen erzeugt dadurch das erste Hubgetriebe einen relativ großen Hub mit kleiner Klemmkraft und anschließend das zweite Hubgetriebe bei einem kleineren Hub eine größere Klemmkraft. Das Lösen erfolgt durch Drehung in entgegengesetzte Richtung, wodurch zuerst das zweite, und dann das erste Hubgetriebe in die abgesenkte Löseposition gebracht wird. Durch die in Reihe geschalteten Hubgetriebe kann eine Betätigung zum Fixieren zuerst in einen relativ großen Hub umgesetzt werden, beispielsweise um Formschlusselemente miteinander in Eingriff zu bringen, wozu eine geringe Klemmkraft ausreichend ist. Durch den nachfolgenden kleinen Hub mit großer Klemmkraft kann eine sichere reibschlüssige Feststellung erfolgen.

In der bekannten Ausführung ist das erste Hubgetriebe als Kurven- oder Nockengetriebe ausgebildet, bei dem an der Hubscheibe ausgebildete Nocken mit in Umfangsrichtung keilförmig ansteigenden Gleitschrägen axial gegen eine an der Druckscheibe ausgebildeten komplementären Kulisse gerichtet sind. Das zweite Hubgetriebe weist an Hub- und Druckscheibe Laufbahnen auf, zwischen denen Kugeln als abrollbare Wälzkörper angeordnet sind. Eine derartige Wälzlageranordnung ist leichtgängig, und durch flach ansteigende Laufbahnen kann ein hohes Übersetzungsverhältnis mit einer großen Klemmkraft bei geringem Hub realisiert werden. Die hohe Klemmkraft erzeugt jedoch im Kontakt zwischen den Kugeln und den Laufbahnen eine derart hohe Flächenpressung, dass die Kugeln plastisch in die Laufbahn eingefomt werden und vertiefte Pressmarken hinterlassen können. Dadurch werden die Laufbahnen uneben und verschlissen, wodurch es zu einer ungleichmäßigen und ruckartigen Kraftübertragung kommt. Dies kann eine Beeinträchtigung der Klemmfunktion bewirken, und führt in jedem Fall zu einem als negativ empfundenen Bediengefühl. Um den Verschleiß der Laufbahnen zu verringern, kann zwar die erzeugte Klemmkraft reduziert werden, wodurch jedoch die Fixierung geschwächt wird.

Angesichts der vorangehend erläuterten Problematik ist es eine Aufgabe der vorliegenden Erfindung, eine verbesserte zweistufige Spannvorrichtung anzugeben, welche die vorgenannten Probleme löst, und einen geringeren Verschleiß hat.

### Darstellung der Erfindung

Diese Aufgabe wird erfindungsgemäß gelöst durch eine Spannvorrichtung mit den Merkmalen des Anspruchs 1 und eine Lenksäule mit den Merkmalen des Anspruchs 12. Vorteilhafte Weiterbildungen ergeben sich aus den Unteransprüchen.

Bei einer Spannvorrichtung für eine Lenksäule, umfassend eine um eine Spannachse drehbare Hubscheibe, die über ein erstes Hubgetriebe und mindestens ein zweites Hubgetriebe mit einer relativ zur Drehung der Hubscheibe feststehenden Druckscheibe verbunden ist,
wobei das erste Hubgetriebe ausgebildet ist zur Umsetzung einer relativen Drehung der Hubscheibe in Spannrichtung in einem ersten Betätigungswinkelbereich in einen ersten axialen Hub relativ zur Druckscheibe, und das zweite Hubgetriebe ausgebildet ist zur Umsetzung einer auf den ersten Betätigungswinkelbereich folgenden weiteren Drehung der Hubscheibe in einem zweiten Betätigungswinkelbereich in einen zweiten axialen Hub zwischen Hubscheibe und Druckscheibe, ist erfindungsgemäß vorgesehen, dass zumindest eines der Hubgetriebe als Kippstiftgetriebe ausgebildet ist, mit mindestens einem Kippstift, der sich in Richtung seiner Stiftachse zwischen korrespondierenden Lagerstellen an der Hubscheibe und der Druckscheibe abstützt.

Vorzugsweise kann das zweite Hubgetriebe als Kippstiftgetriebe ausgebildet sein. Dieses hat bevorzugt ein größeres Übersetzungsverhältnis als das erste Hubgetriebe. Bei einer Betätigung durch relative Drehung zwischen Hub- und Druckscheibe bewirkt das Kippstiftgetriebe einen kleineren Hub mit größerer Klemmkraft, als das erste Hubgetriebe bei derselben relativen Drehung.

Das Kippstiftgetriebe kann in an sich bekannter Form aufgebaut sein, wobei ein oder bevorzugt mehrere länglich-stiftförmige Kippstifte über den Umfang verteilt sind, die gegen die axial einander gegenüberliegenden Stirnseiten von Hub- und Druckscheibe derart abgestützt sind, dass sie aus einer relativ zur Spannachse geneigten Ruheposition, die der Lösestellung entspricht, durch eine relative Drehung in etwa parallel zur Spannachse liegende Strecklage gebracht werden können, welche der Fixierstellung bei maximalem Hub entspricht.

Bevorzugt weist das Kippstiftgetriebe genau zwei oder genau drei oder genau vier Kippstifte auf. Diese können bevorzugt gleichmäßig oder ungleichmäßig über den Umfang verteilt angeordnet sein.

Erfindungsgemäß werden die spezifischen Vorteile eines Kippstiftgetriebes zur Optimierung einer zweistufigen Spannvorrichtung eingesetzt. Durch die Dimensionierung und Anordnung der Kippstifte kann ein definiertes Übersetzungsverhältnis realisiert werden. Insbesondere in der Nähe der sogenannten Totpunkt- oder Streckpunktlage, in welcher die Kippstifte im maximal möglichen Hub parallel zur Spannachse liegen, kann ein hohes Übersetzungsverhältnis mit einer großen Klemmkraft realisiert werden.

An ihren beiden Enden weisen die Kippstifte bevorzugt jeweils einen Lagerkopf auf, der jeweils in einer in der Hub- und Druckscheibe ausgebildeten Lagerstelle gelagert ist, welche die auftretenden Komponenten der Klemmkraft in axialer und radialer Richtung, und in Umfangsrichtung auf den Kippstift überträgt. Vorzugsweise weist eine Lagerstelle eine muldenförmige Vertiefung auf, welche auch als Lagertasche oder Tasche bezeichnet wird, in die jeweils ein Kippstift mit einem Ende axial eintaucht und quer zur Spannachse gelenkig verschwenkbar gelagert und gestützt ist. Beispielsweise kann ein Kippstift an seinen Enden kugelabschnittfömige Lagerköpfe aufweisen, sogenannte Kugelköpfe, und die Lagerstellen können entsprechend als damit korrespondierende Kugelpfannen ausgestaltet sein, so dass jeweils Kugelgelenke gebildet werden.

Beim Betätigen zum Fixieren der Spannvorrichtung werden die Kippstifte zwischen der Hubund Druckscheibe in Richtung des Hubs aufgerichtet, bis der maximale Hub bei maximaler Klemmkraft erreicht ist, wenn sie in der Totpunkt- oder Strecklage parallel zur Spannachse ausgerichtet sind. Entsprechend wirkt dann als maximale Belastung die ausgeübte Klemmkraft zwischen den Kippstiften und deren Lagerstellen. Die dabei jeweils von der Lagerkraft in den Lagerstellen belastete Lagerfläche kann durch eine angepasste Formgebung und Dimensionierung derart belastbar gestaltet werden, dass auch bei hoher Klemmkraft keine unzulässig hohen Flächenpressungen und somit keine dauerhaften Verformungen oder Verschleiß an den Kippstiften und Hub- oder Druckscheibe auftreten.

Bevorzugt weisen die Kippstifte einen Stahl auf, oder sind aus einem Stahl gebildet. Besonders bevorzugt ist der Stahl gehärtet. Um den Verschleiss noch weiter zu reduzieren kann der Kippstift durchgehärtet werden. In Versuchen hat sich gezeigt, dass eine minimale Vickers-Härte der Oberfläche des Kippstifts von größer gleich 300 HV30 nach DIN EN ISO 6507 vorteilhaft ist und den Verschleiß deutlich reduziert.

Ein Vorteil eines erfindungsgemäßen Kippstiftgetriebes gegenüber der aus dem Stand der Technik bekannten Wälzlageranordnung im zweiten Hubgetriebe ist, dass ein höheres Kraftübersetzungsverhältnis bei geringerem Verschleiß realisierbar ist. Dadurch ist ein als angenehm empfundenes, gleichmäßiges Bediengefühl über die gesamte Betriebsdauer einer Lenkung gewährleistet.

Das Kippstiftgetriebe kann bevorzugt in Reihe wirksam mit dem anderen Hubgetriebe angeordnet sein. Besonders bevorzugt bildet das Kippstiftgetriebe ein zweites Hubgetriebe, welches in Reihe wirksam mit dem ersten Hubgetriebe angeordnet ist. Dadurch wird die stufenweise Aktivierung der beiden Hubgetriebe bei der Betätigung zur Fixierung der Spannvorrichtung vorgegeben. Bei der Fixierung befindet sich das erste Hubgetriebe nach einer relativen Drehung über einen ersten Betätigungswinkelbereich in seinem maximalen, ersten Hub. Eine Fortsetzung der Drehung in den zweiten Betätigungswinkelbereich aktiviert das Kippstiftgetriebe, wobei dessen zweiter Hub zur Vergrößerung des axialen Abstands zwischen Hub- und Druckscheibe zum ersten Hub addiert wird. Umgekehrt wird bei der Drehbewegung zum Lösen der Spannvorrichtung zuerst durch eine Verkippung der Kippstifte aus der Strecklage der Hub des Kippstiftgetriebes verkürzt, und anschließend das erste Hubgetriebe in seine Löseposition gebracht, in der die Hub- und Druckscheibe gegeneinander abgesenkt werden, bis sie in der Löseposition den kürzesten axialen Abstand voneinander haben.

Es kann vorgesehen sein, dass die Hubscheibe an einem Antriebselement drehfest angebracht ist. Das Antriebselement kann einen Betätigungshebel umfassen, auch als Spannhebel bezeichnet, welcher eine manuelle Betätigung der Spannvorrichtung durch Drehung der Hubscheibe relativ zur Druckscheibe ermöglicht, die an der Lenksäule festgelegt ist. Es ist ebenfalls möglich, zur relativen Drehung einen motorischen Stellantrieb vorzusehen. Ein derartiger Stellantrieb kann bevorzugt einen elektrischen Stellmotor umfassen, der bevorzugt über ein Getriebe an ein Antriebselement gekuppelt ist. Bei einer derartigen motorischen Spannvorrichtung hat der erfindungsgemäße Einsatz eines Kippstiftgetriebes den besonderen Vorteil, das mechanische und elektrische Störungen durch einen ungleichmäßigen und ruckartigen Lauf des Stellantriebs, der im Stand der Technik bei verschlissenen oder beschädigten Laufbahnen auftreten kann, weitgehend vermieden werden können.

Zur Realisierung einer Spannvorrichtung an einer Lenksäule kann vorgesehen sein, dass die Hubscheibe an einem Spannbolzen um die Spannachse drehbar gelagert angebracht ist. Der Spannbolzen kann drehbar gelagert sein, beispielsweise in der Manteleinheit einer Lenksäule, und die beiden Seitenwangen durchsetzen, zwischen denen sich die Stelleinheit befindet. Die Hubscheibe kann drehfest auf der Betätigungsseite an dem Spannbolzen befestigt sein. Die Druckscheibe stützt sich von außen gegen die eine Seitenwange ab. An seinem der Betätigungsseite abgewandten Ende stützt sich der Spannbolzen über ein Widerlager von außen an der anderen Seitenwange ab. Dadurch wird eine Vergrößerung des Hubs zwischen Hub- und Druckscheibe umgesetzt in eine von außen gegen die Seitenwangen wirkende Druckspannung, wobei der Spannbolzen mit einer Zugspannung beaufschlagt ist, durch welche die Seitenwangen mit der Klemmkraft (Druckkraft) gegen die Stelleinheit verspannt werden. Bevorzugt durchsetzt der Spannbolzen die Druckscheibe koaxial, und ist entweder drehfest mit der Hubscheibe verbunden, und wird zur Betätigung zusammen mit dieser gedreht, oder die Hubscheibe ist drehbar auf einem bei der Betätigung feststehenden Spannbolzen gelagert. Die Hubscheibe in jedem Fall kann mit einem Betätigungshebel oder einem motorischen Stellantrieb gekoppelt sein.

Bevorzugt kann vorgesehen sein, dass das erste Hubgetriebe und das zweite Hubgetriebe koaxial angeordnet sind. Das erfindungsgemäße Kippstiftgetriebe weist bevorzugt zwei oder mehr gleichmäßig über den Umfang koaxial zur Spannachse angeordnete Kippstifte auf. Diese können radial innerhalb, außerhalb und/oder auf einem Umfangsbereich, und/oder axial zumindest teilweise innerhalb oder außerhalb eines Achsbereiches angeordnet sein, in dem sich das erste Hubgetriebe befindet. Dadurch kann ein kompakter, bauraumsparender Aufbau realisiert werden.

Es ist vorteilhaft, dass die Lagerstellen in die Hubscheibe und/oder die Druckscheibe vertieft eingeformte Lagertaschen aufweisen. Die Lagertaschen können als muldenförmige Vertiefungen ausgebildet sein, welche mit den Lagerköpfen an den Enden der Kippstifte zur Bildung einer Gelenkanordnung mit zwei Rotationsfreiheitsgraden korrespondierend ausgebildet sind. Beispielsweise können die Kippstifte Kugelköpfe, d.h. sphärisch geformte Enden aufweisen, die in Lagertaschen in Form von korrespondierenden Kugelpfannen gelagert sind. Die Kugelpfannen können ebenfalls einen sphärischen Innenquerschnitt haben, der mit einem vorgegebenen Lagerspiel an den Durchmesser der Kugelköpfe angepasst ist.

Eine vorteilhafte Weiterbildung sieht vor, dass die Lagertaschen im Querschnitt konisches, oder besonders bevorzugt ein gotisches Profil aufweisen. Dadurch wird eine definierte ringförmige Lagerfläche zwischen dem Kugelkopf und der Lagertasche erzeugt, welche eine hohe Lagerlast bei einer definierten Lagergeometrie ermöglicht. Ein gotisches Profil mit zwei spitz zusammenlaufenden Kreisbogensegmenten bietet eine besonders vorteilhafte, geringere Flächenpressung, in diesem Fall auch als Hertzsche Pressung bezeichnet, und eine geringere Kerbwirkung, so dass eine höhere Belastung und eine höhere Betriebssicherheit ermöglicht werden.

Eine vorteilhafte Ausführung der Erfindung sieht vor, dass ein Positionierelement ausgebildet ist zur definierten Positionierung des Kippstifts relativ zur Hubscheibe und/oder zur Druckscheibe. Wird die Spanneinrichtung durch relative Drehung in Löserichtung gelöst, senkt sich die Hubscheibe gegen die Druckscheibe, bis zuerst Endposition des zweiten Hubgetriebes erreicht ist. Dabei gelangen die Kippstifte aus der Strecklage in eine Kippstellung. Beim weiteren Absenken durch Lösen des ersten Hubgetriebes entfernen sich wegen der unterschiedlichen Kinematik der beiden Hubgetriebe die Lagerstellen an Hubund Druckscheibe voneinander, so dass die Kippstifte den Kontakt zu mindestens einer der Lagerstellen verlieren und nicht mehr definiert zwischen den Lagerstellen gehalten sind. Durch das Positionierelement, auch als Rückhalteelement bezeichnet, werden die Kippstifte bezüglich der Hubscheibe oder der Druckscheibe dann in einer definierten räumlichen Position und Orientierung gehalten. Dadurch wird eine unkontrollierte Verlagerung der Kippstifte verhindert. Außerdem ist sichergestellt, dass beim Fixieren die Kippstifte definiert und reproduzierbar in die Lagerstellen eingreifen. Wird das zweite Hubgetriebe beim Fixieren aktiviert, taucht das freie, aber durch das Positionierelement definiert gehaltene Ende des Kippstifts sicher in die Lagerstelle ein, und die Hubkraft wird von dem Kippstift über die beiden Lagerstellen übertragen.

Bevorzugt kann das Positionierelement mindestens ein Federelement umfassen, welches den Kippstift federnd gegen die Hubscheibe und/oder die Druckscheibe belastet. Das Federelement kann beispielsweise einen Kippstift gegen die Drehrichtung beim Fixieren in eine als Vertiefung oder Kugelpfanne ausgebildete Lagerstelle elastisch andrücken. Durch das Federelement kann auf diese Weise elastisch gestützt eine definierte Ruheposition der Kippstifte eingenommen werden. Beim Aktivieren des zweiten Hubgetriebes greifen die Lagerköpfe der Kippstifte in die Lagerstellen ein, und werden durch weitere Drehung gegen die Federkraft in die Strecklage gebracht.

Mindestens ein Federelement, bevorzugt eine der Anzahl der Kippstifte entsprechende Anzahl von Federelementen kann an einem Federträger angebracht sein. Ein Federträger kann an der Hubscheibe oder der Druckscheibe festgelegt sein, an der die Kippstifte durch die Federelemente gehalten werden sollen. Der Federträger kann beispielsweise ringförmig ausgebildet sein, der die druckscheibe und/oder die Hubscheibe koaxial umgibt. Die Federelemente können von dem Federträger elastisch verformbar vorstehen, wobei der Federträger beispielsweise als Kunststoff- oder Blechformteil ausgebildet sein kann. Es ist möglich, dass die Federelemente einstückig mit dem Federträger ausgebildet sind, beispielsweise als federelastische Kunststoff- oder Blechlaschen.

Eine vorteilhafte Ausführung der Erfindung sieht vor, dass das Kippstiftgetriebe eine stabile Spannposition aufweist, in welcher die Hubscheibe und die Druckscheibe über den maximalen Hub des Kippstiftgetriebes hinaus gegeneinander verdreht sind, wobei Anschlagmittel ausgebildet sind, die in der stabilen Spannposition in Umfangsrichtung gegeneinander anschlagen und eine weitere Drehung über die stabile Spannposition hinaus blockieren. Durch die Rückwirkung der durch den Hub ausgeübten Klemmkraft wirkt auf die Hub- und Kippscheibe eine entgegen der Drehung zum Fixieren gerichtete Rückstellkraft. Im maximalen Hub, wenn die Kippstifte sich in der Totpunkt- oder Strecklage befinden, wirkt die Klemmkraft in Richtung der Kippstifte, wodurch ein labiler Zustand erzeugt wird. Bereits eine geringe Störung könnte dazu führen, dass durch die Rückstellkraft die Spannvorrichtung selbsttätig wieder in die Lösestellung zurückbewegt würde. Um die Hubposition und damit die Fixierstellung dauerhaft zu sichern, wird erfindungsgemäß ausgenutzt, dass beim Überschreiten der Strecklage durch weitere Drehung die Rückstellkraft dieses Mal in Richtung der Drehung zum Fixieren wirkt, und der Hub- und Druckscheibe selbsttätig weiterdreht. Nach dem Überschreiten der Strecklage wird durch die Anschlagmittel eine weitere relative Drehung blockiert. Durch die auf den Anschlag wirkende Rückstellkraft wird ein stabiler Zustand erzeugt, in dem die Hub- und Druckscheibe relativ zueinander gehalten werden. Dadurch, dass die zur Drehung zum Fixieren erforderliche Betätigungskraft bis zur Strecklage ansteigt, und danach die wirkende Rückstellkraft die weitere Drehung bis zum Anschlag bewirkt, wird ein Rastpunkt definiert, der beim Fixieren überwunden werden muss und sicher und eindeutig das Erreichen der stabilen Spannposition anzeigt. Durch die Ausnutzung der für das Kippstiftgetriebe spezifischen Totpunkt- oder Strecklage kann ein bei einer manuellen Betätigung über einen Spannhebel ein angenehmes Bediengefühl realisiert werden. Mit anderen Worten kann ein sogenanntes "Einrastgefühl" erzeugt werden, da die Bedienkraft nach dem Überschreiten der Totpunkt- oder Strecklage stark absinkt und die Bedienkraft ihren Richtungssinn ändern, also ein Vorzeichenwechsel des Bedienkraftwertes stattfindet. Außerdem kann der Rastpunkt verschleißärmer als bei anderen Bauformen von Rasteinrichtungen realisiert werden.

Die Anschlagmittel können in Umfangsrichtung in Richtung der Drehung zur Fixierung gegeneinander in Kontakt bringbare Anschlagflächen umfassen, die miteinander Korrespondierens an Hub- und Druckscheibe, an den Kippstiften und der Hubscheibe oder der Druckscheibe ausgebildet sind. Beispielsweise können die als Vertiefungen ausgebildeten Lagertaschen so ausgestaltet sein, dass sie nur eine kleine, begrenzte Verkippung der Kippstifte nach dem Erreichen der Strecklage zulassen, so dass die Kippstifte Formschlusselemente bilden. Alternativ oder zusätzlich können die Hubscheibe und die Druckscheibe jeweils einen Anschlagabschnitt mit einer jeweiligen Anschlagfläche aufweisen, die miteinander in Wirkeingriff bringbar sind zur Bereitstellung einer Anschlagsituation, in der die Druckscheibe und die Hubscheibe in dieser Drehrichtung nicht weiter verdrehbar sind, also durch das Anschlagen eine weitere Verdrehung in dieser Drehrichtung verhindert ist.

Die Erfindung umfasst weiterhin dass das erste Hubgetriebe als Kurvengetriebe ausgebildet ist, mit an der Hubscheibe ausgebildeten Nocken, welche axial gegen eine an der Druckscheibe ausgebildeten komplementären Kulisse gerichtet sind. Derartige, Kurvenoder Nockengetriebe sind zur Verspannung von Lenksäulen bekannt. Sie weisen eine als Nockenscheibe ausgebildeten Hubscheibe und einer dazu komplementäre, als Kulissenscheibe ausgebildeten Druckscheibe auf. Die Kulissenscheibe hat eine Kulissenkontur mit einer kreisringförmigen Nockenbahn, mit in Umfangsrichtung keilförmig ansteigenden Gleitschrägen -rampen, auf denen die Nocken der Nockenscheibe in Umfangsrichtung entlanggleiten können. Das zweite Hubgetriebe ist erfindungsgemäß als Kippstiftgetriebe ausgebildet. Dabei ist es vorteilhaft, dass die Lagerstellen für die Kippstifte im Bereich der Nocken oder der Kulissenbahn angeordnet sind, beispielsweise als in einen Nocken oder zwischen zwei Nocken eingeformte Lagertasche. Dadurch kann ein besonders kompakter Aufbau der beiden Hubgetriebe realisiert werden. Dabei ist es vorteilhaft, wenn die Anzahl der Kippstifte mit der Anzahl der Nocken korrespondiert, beispielsweise jeder der Nocken eine Lagerstelle aufweist.

In einer vorteilhaften Weiterbildung sind zwei Hubgetriebe als Kippstiftgetriebe ausgebildet. Mit anderen Worten können das erste und zweite Hubgetriebe als Kippstiftgetriebe ausgebildet sein.

In einer Weiterbildung umfasst die Spanneinrichtung eine um eine Spannachse drehbare Hubscheibe, die über ein erstes Hubgetriebe, ein zweites Hubgetriebe, ein drittes Hubgetriebe und ein viertes Hubgetriebe mit einer relativ zur Drehung der Hubscheibe feststehenden Druckscheibe verbunden ist, wobei zwischen der Hubscheibe und der Druckscheibe eine Zwischenscheibe angeordnet ist, die gegenüber der Hubscheibe und der Druckscheibe verdrehbar ist, wobei zwischen der Hubscheibe und der Zwischenscheibe das erste und zweite Hubgetriebe angeordnet ist und zwischen der Zwischenscheibe und der Druckscheibe das dritte und vierte Hubgetriebe angeordnet ist, wobei das erste Hubgetriebe ausgebildet ist zur Umsetzung einer relativen Drehung der Hubscheibe in Spannrichtung in einem ersten Betätigungswinkelbereich in einen ersten axialen Hub relativ zur Druckscheibe, und das zweite Hubgetriebe ausgebildet ist zur Umsetzung einer auf den ersten Betätigungswinkelbereich folgenden weiteren Drehung der Hubscheibe in einem zweiten Betätigungswinkelbereich in einen zweiten axialen Hub zwischen Hubscheibe und Druckscheibe, und das dirtte Hubgetriebe ausgebildet ist zur Umsetzung einer auf den zweiten Betätigungswinkelbereich folgenden weiteren Drehung der Hubscheibe in einem dritten Betätigungswinkelbereich in einen dritten axialen Hub zwischen Hubscheibe und Druckscheibe, und das vierte Hubgetriebe ausgebildet ist zur Umsetzung einer auf den dritten Betätigungswinkelbereich folgenden weiteren Drehung der Hubscheibe in einem vierten Betätigungswinkelbereich in einen vierten axialen Hub zwischen Hubscheibe und Druckscheibe.

Erfindungsgemäß ist zumindest eines der Hubgetriebe als Kippstiftgetriebe ausgebildet, mit mindestens einem Kippstift, der sich in Richtung seiner Stiftachse zwischen korrespondierenden Lagerstellen an der Hubscheibe und der Zwischenscheibe oder der Zwischenscheibe und der Druckscheibe abstützt.

In einer vorteilhaften Weiterbildung sind zwei der Hubgetriebe als Kippstiftgetriebe ausgebildet. Besonders bevorzugt ist das zweite Hubgetriebe und das vierte Hubgetriebe als Kippstiftgetriebe ausgebildet.

Die Erfindung umfasst weiterhin eine Lenksäule, umfassend eine Trageinheit und eine Stelleinheit, und mit einer mit der Trageinheit und der Stelleinheit wirkverbundenen Spannvorrichtung, die ausgebildet ist, eine Klemmkraft zur Verspannung von Trageinheit und Stelleinheit auszuüben, dadurch gekennzeichnet, dass die Spannvorrichtung gemäß einer oder mehrerer der vorangehend beschriebenen Ausführungsformen ausgestaltet ist.

Bevorzugt ist die Druckscheibe drehfest um die Spannachse an der Trageinheit gehalten.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule mit einer erfindungsgemäßen Spannvorrichtung in einer schematischen perspektivischen Darstellung,
- Figur 2: die Lenksäule gemäß Figur 1 mit einer schematisch auseinander gezogenen Darstellung der Spannvorrichtung,
- Figur 3: eine vergrößerte auseinander gezogen Darstellung einer erfindungsgemäßen Spannvorrichtung ,
- Figur 4: die Hubscheibe der Spannvorrichtung gemäß Figur 3,
- Figur 5: die Druckscheibe der Spannvorrichtung gemäß Figur 3,
- Figur 6: die Spannvorrichtung gemäß Figur 3 in perspektivischer Ansicht im zusammengesetzten Zustand,
- Figur 7: die Spannvorrichtung gemäß Figuren 2 bis 6 in Löseposition in einer seitlichen Ansicht,
- Figur 8: die Spannvorrichtung aus Figur 7 in einer Zwischenposition,
- Figur 9: die Spannvorrichtung aus Figur 7 und 8 im maximalen Hub in Strecklage der Kippstifte,
- Figur 9a: eine Detailansicht der Kippstift-Lagerung aus Figur 9,
- Figur 10: die Spannvorrichtung aus Figur 7, 8 und 9 in stabiler Spannposition,
- Figur 11: eine Spannvorrichtung gemäß der Figuren 2 bis 10 mit einem zusätzlichen Positionierelement in einer Darstellung wie in Figur 3,
- Figur 12: eine teilweise Schnittansicht der Spannvorrichtung gemäß Figur 11,
- Figur 13: eine Spannvorrichtung in einer alternativen Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

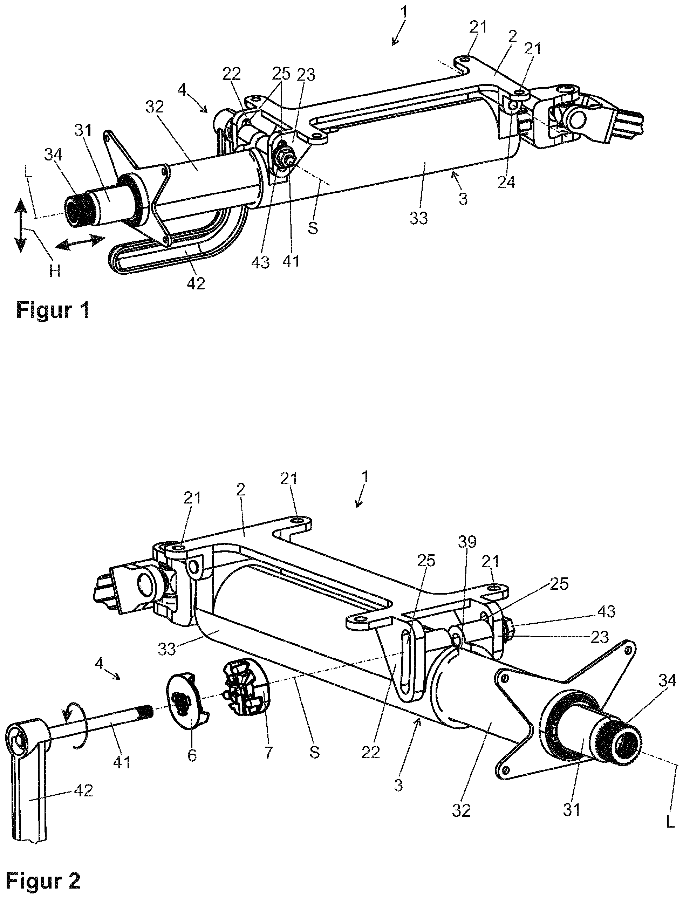

Figur 1 und 2 zeigen in perspektivischer Ansicht schräg von hinten rechts (Figur 1) und hinten links, teilweise in Explosionsdarstellung (Figur 2) - bezogen auf die Fahrtrichtung eines nicht gezeigten Fahrzeugs - eine Lenksäule 1, die eine Trageinheit 2 aufweist. Zur Verbindung mit der Karosserie eines nicht dargestellten Kraftfahrzeugs umfasst die Trageinheit 2 Befestigungsmittel 21. Von der Trageinheit 2 erstrecken sich einander gegenüberliegende Seitenwangen 22 und 23, die von der Trageinheit 2 gabelartig nach unten vorstehen.

Zwischen den Seitenwangen 22 und 23 ist eine Stelleinheit 3 angeordnet, mit einer Lenkspindel 31, die um eine Längsachse L drehbar in einem inneren Mantelrohr 32 gelagert ist. Das Mantelrohr 32 in Richtung der Längsachse L längsverschiebbar in einer äußeren Manteleinheit 33 aufgenommen, wie schematisch mit einem Doppelpfeil angedeutet ist. Am bezogen auf die Fahrtrichtung hinterem Ende weist die Lenkspindel einen Befestigungsabschnitt 34 zur drehfesten Anbringung eines nicht dargestellten Lenkrads auf.

Die Manteleinheit 33 ist um eine Schwenkachse 24, die quer zur Längsachse L liegt, an der Trageinheit 2 schwenkbar gelagert. Dadurch kann die Stelleinheit 3 zur Einstellung der Höhenposition des Lenkrads zwischen den Seitenwangen 22 und 23 relativ zur Trageinheit in Höhenrichtung H auf und ab bewegt werden, wie mit einem Doppelpfeil angedeutet.

Eine Spannvorrichtung 4 ist ausgebildet, um die Stelleinheit 3 wahlweise in Fixierstellung relativ zur Trageinheit 2 zu verspannen oder in Freigabestellung eine Verstellung in Richtung der Längsachse L und/oder in Höhenrichtung H zu ermöglichen.

Die Manteleinheit 33 weist einen Schlitz 39 auf, der sich in Richtung der Längsachse erstreckt und eine Schelle bildet. In der Fixierstellung ist die Breite des Schlitzes 39 kleiner als die Breite des Schlitzes 39 in der Freigabestellung, so dass das Mantelrohr 32 in der Manteleinheit in der Fixierstellung eingeklemmt ist und somit im Normalbetrieb gegenüber der Manteleinheit 33 unverschiebbar ist.

Die Spannvorrichtung 4 weist einen Spannbolzen 41 auf, der sich auf einer Spannachse S quer zur Längsachse L durch Langlöcher 25 in den einander gegenüberliegenden Seitenwangen 22 und 23 erstreckt. Die Langlöcher 25 sind in Höhenrichtung H ausgedehnt. An einem Ende des Spannbolzens 41 ist ein Betätigungshebel 42 drehfest abgebracht, während das andere Ende in einem Widerlager 43 drehbar, aber zugfest an der Seitenwange 23 gelagert ist.

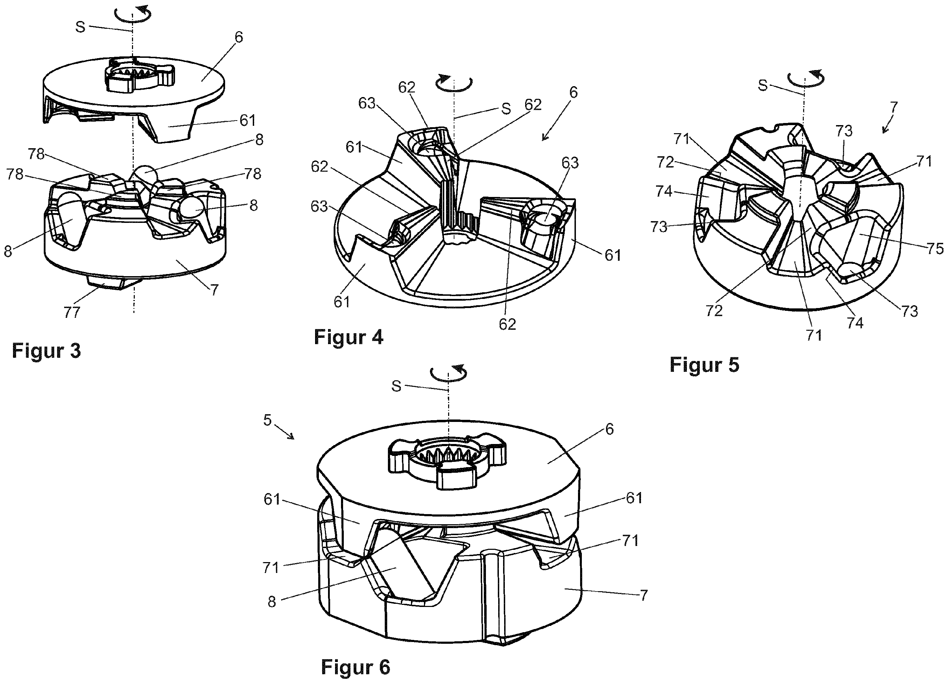

Die Spannvorrichtung 4 weist ein zweistufiges Hubgetriebe 5 auf, in dem ein erstes und ein zweites Hubgetriebe gemäß der Erfindung integriert sind. Das Hubgetriebe 5 ist im Detail in den nachfolgenden Figuren 3 bis 12 dargestellt, und umfasst eine Hubscheibe 6, eine Druckscheibe 7 (Kulissenscheibe) sowie im gezeigten Bespiel drei Kippstifte 8.

Die Hubscheibe 6 und die Druckscheibe 7 sind koaxial zur Spannachse S auf dem Spannbolzen 41 angeordnet, wobei die Hubscheibe 6 drehfest mit dem Spannbolzen 7 verbunden ist. Die Druckscheibe 7 ist bezüglich Drehung feststehend außen an der Seitenwange 22 festgelegt. Dazu weist die Druckscheibe 7 einen Vorsprung 77 auf, der in das eine Langloch 25 der Seitenwange eingreift und somit eine Verdrehung der Druckscheibe 7 um die Spannachse S begrenzt bzw. verhindert.

Für die nachfolgenden Erläuterungen ist die Drehrichtung des Spannbolzens 41 und der Hubscheibe 6 relativ zur Druckscheibe 7 zum Fixieren festgelegt als Drehung gegen den Uhrzeigersinn, bei einer Ansicht von außen auf die Hubscheibe 6, wie in Figur 2 angedeutet. Dieser Drehsinn der Fixierbewegung bzw. Fixierdrehung ist in den nachfolgenden Figuren übernommen und schematisch angegeben.

Die Hubscheibe 6 weist auf ihrer der Druckscheibe 7 zugewandten Stirnseite drei axial vorstehende Nocken 61 auf, die sich kreissegmentförmig radial erstrecken. Die Nocken 61 weisen auf ihrer bei einer Fixierdrehung (entgegen dem Uhrzeigersinn) in Drehrichtung weisenden Seitenfläche jeweils eine Gleitschräge 62 auf. Die Gleitschräge 62 bildet dabei eine in Umfangsrichtung ansteigende, rampenförmige Gleitfläche.

Die Druckscheibe 7 ist als Kulissenscheibe ausgebildet, mit zu den Nocken 61 der Hubscheibe 6 korrespondierenden Kulissenbahnen, die jeweils in einem axial eingeformten Tal 71 beginnend in Umfangsrichtung mit dem Drehsinn bei einer Fixierdrehung keilförmig ansteigend in Gleitschrägen 72 übergehen. Jeweils ein Tal 71 ist als axiale eingeformte Vertiefung ausgebildet, die mit jeweils einem Nocken 61 korrespondiert.

Die Nocken 61 bilden zusammen mit den Tälern 71 ein erstes Hubgetriebe, nämlich ein Nockengetriebe, wie es im Prinzip aus dem Stand der Technik bekannt ist.

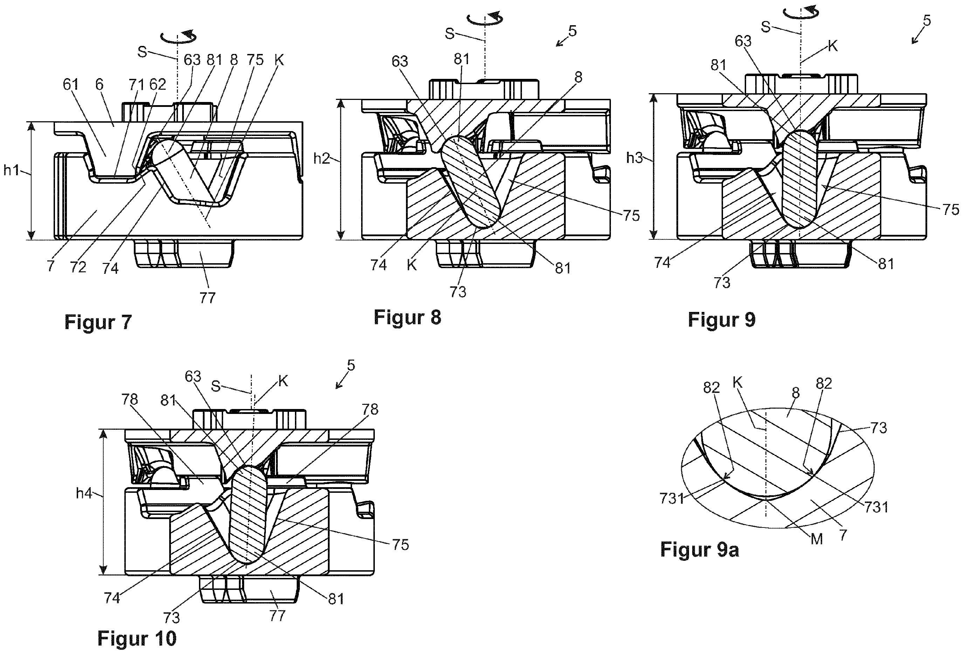

Figur 7 zeigt, wie die Nocken 61 in der Löseposition in die Täler 71 axial eintauchen. Dabei liegen die Gleitschrägen 62 und 72 zumindest teilweise in Umfangsrichtung gegeneinander an. Das Hubgetriebe 5 befindet sich in Löseposition, in der die Hubscheibe 6 und die Druckscheibe 7 gemessen über deren einander abgewandte Außenseiten einen axialen Abstand h1 haben, der auch als Ruhe- oder Lösehub bezeichnet werden kann.

Wird die Hubscheibe 6 ausgehend von der in Figur 7 gezeigten Löseposition um einen ersten Betätigungswinkelbereich in Fixierrichtung entgegen dem Uhrzeigersinn relativ zur Druckscheibe 7 verdreht, wie mit dem Pfeil angedeutet, gleiten die Gleitschrägen 62 und 72 in Umfangsrichtung aufeinander, und bewirken durch ihre Keilform einen ersten Hub, der mit einer Vergrößerung des axialen Abstands h1 bis zum Abstand h2 einhergeht, wie in Figur 8 gezeigt. Die Differenz (h2-h1) entspricht folglich dem ersten Hub.

Ein zweites, erfindungsgemäß als Kippstiftgetriebe ausgebildetes Hubgetriebe weist die Kippstifte 8 auf, die zwischen der Hubscheibe 6 und der Druckscheibe 7 angeordnet sind, wie im Folgenden erläutert wird.

Jeder Kippstift 8 ist zylindrisch-stiftförmig ausgebildet und erstreckt sich auf seiner Kippstiftachse K. An beiden Enden weist eines Kippstifts 8 sind halbkugelförmig gerundete Kugelköpfe 81 ausgebildet.

Mit dem einen Ende ist ein Kippstift 8 jeweils in einer Lagertasche 73 gelagert, welche im Umfangsbereich zwischen zwei Tälern 71 in der Druckscheibe 7 ausgebildet ist. Die Lagertasche 73 ist als mit dem Kugelkopf 81 korrespondierende Gelenkpfanne geformt, zur Bildung eines zweiachsigen Kippgelenks. Im Bereich des Kugelkopfes 81 hat die Lagertasche 83 bevorzugt ein gotisches Querschnittsprofil mit zwei in einem Mittelpunkt M spitz zusammenlaufenden Kreisbögen 731, die einen größeren Radius haben als der Kugelkopf 81, wie in der vergrößerten Ansicht von Figur 9a erkennbar ist. Dadurch liegt der Kugelkopf in der Lagertasche 73 nur auf einer ringförmig umlaufenden Lagerfläche 82 an. Es kann auch vorgesehen sein, dass die Lagertasche 73 einen kugelförmigen Querschnitt hat.

In der Lagertasche 73 ist der Kugelkopf 81 radial, axial und in Umfangsrichtung gestützt.

Die Lagertasche 73 hat auf ihrer der Fixierrichtung entgegengesetzt liegenden Seite eine Stützfläche 74, und auf ihrer in Fixierrichtung vorn liegenden Seite eine Gegenfläche 75.

In der in Figur 7 gezeigten Löseposition ist der Kippstift 8 maximal gegen die Spannachse S geneigt, und liegt in seiner Ruheposition gegen die Stützfläche 74 an.

In der Hubscheibe 6 ist jeweils im Bereich eines Nockens 61 eine Lagertasche 63 ausgebildet, welche jeweils mit dem der Druckscheibe 7 abgewandten Kugelkopf 81 eines Kippstifts 8 korrespondiert. Die Lagertasche 63 kann bevorzugt einen gotisches Querschnittsprofil haben, analog zum Querschnitt der Lagertasche 73 gemäß Figur 9a.

In dem in Figur 8 gezeigten Zustand greift der Kippstift 8 mit seinem Kugelkopf 81 in die Lagertasche 63 ein, so dass er bei der weiteren Drehung in Fixierrichtung darin radial, axial und in Umfangsrichtung gestützt ist. Dadurch ist das Kippstiftgetriebe aktiviert.

Wird die Hubscheibe 6 ausgehend von der in Figur 8 gezeigten Zwischenstellung weiter in Fixierrichtung entgegen dem Uhrzeigersinn gegen die Druckscheibe 7 gedreht, werden die Kippstifte 8 zwischen den Lagertaschen 73 und 63 abgestützt von der Stirnseite der Druckscheibe 7 aus gesehen aufgerichtet und verkippt. Dabei stehen die Gleitschrägen 62 und 72 nicht mehr in Kontakt miteinander, so dass das erste Hubgetriebe inaktiv ist. Der weitere, zweite Hub erfolgt nur durch das Kippstiftgetriebe, bis die Kippstifte 8 maximal aufgerichtet sind und die Spannachse S parallel zur Kippstiftachse K liegt, wie in Figur 9 gezeigt. Dann ist der maximale Hub h3 zwischen den Außenseiten von Hubscheibe 6 und Druckscheibe 7 erreicht. Der durch das Kippstiftgetriebe veranlasste zweite Hub hat den Betrag der Differenz (h3-h2). Bevorzugt ist der zweite Hub kleiner als der erste Hub.

Der Übergang zwischen dem ersten Hub und zweiten Hub erfolgt bevorzugt derart, dass in einem Hub-Betätigungswinkel-Diagramm die Steigung des Hubs an jeder Stelle differenzierbar ist. Mit anderen Worten sollte das Übersetzungsverhältnis des ersten und zweiten Hubgetriebes im Übergang zwischen den Hubgetrieben keine schlagartige Änderung des Übersetzungsverhältnisses aufweisen. Durch diese Maßnahme kann der Bedienkomfort weiter verbessert werden, da der Übergang zwischen dem ersten und zweiten Hubgetriebe nicht oder nur sehr gering spürbar ist.

In Figur 9 befinden sich die Kippstifte 8 in der Totpunkt- oder Strecklage. Die Hubscheibe 6 kann aus der Strecklage der Kippstifte 8 gemäß Figur 9 weiter in Fixierrichtung gedreht werden, bis die in Figur 10 gezeigte stabile Spannposition eingenommen wird, in der Nocken 61 gegen Anschlagvorsprünge 78 der Druckscheibe 7 anschlagen, und dadurch die weitere relative Drehung blockieren. Dadurch wird eine stabile Spannposition erzeugt, in der die von außen axial auf die Hubscheibe 6 und die Druckscheibe 7 rückwirkende Klemmoder Spannkraft den Kippstift 8 derart belastet und die Nocken 61 gegen die jeweiligen Anschlagvorsprünge drückt, wodurch ein selbsttätiges Lösen entgegen der Fixierrichtung verhindert wird. Der Hub h4 ist etwas geringer als der Hub h3, jedoch ist der Hub h4 größer als der Hub h2. Bevorzugt ist der Winkel zwischen der Kippstiftachse K und der Spannachse in der Spannposition größer 0°, besonders bevorzugt größer 2°. Besonders vorteilhaft ist es, wenn der Winkel kleiner 5° ist, da dadurch ein zu großer Klemmkraftverlust vermieden werden kann.

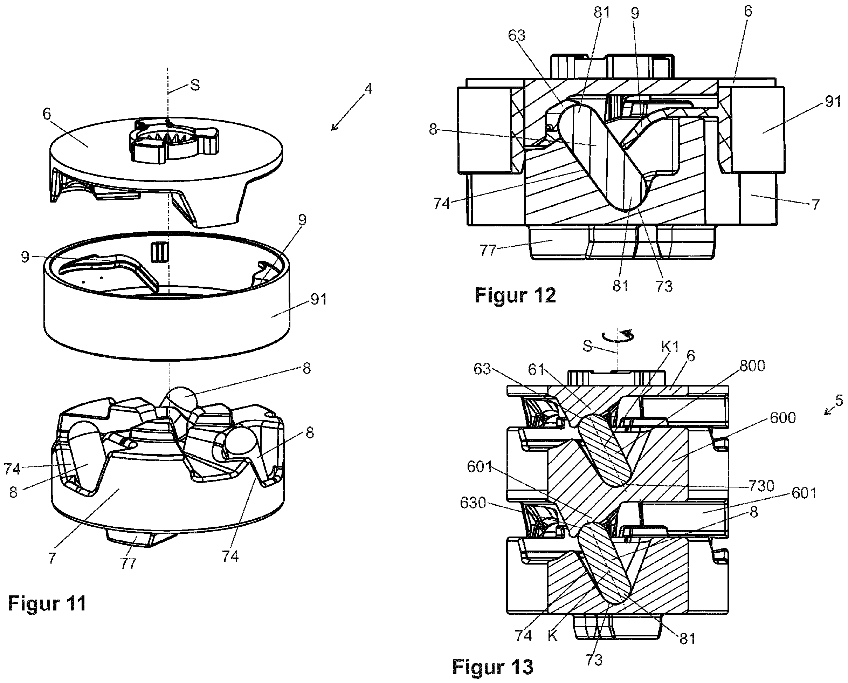

Figuren 11 und 12 zeigen eine Weiterbildung des Hubgetriebes 5, welches zusätzlich Positionierelemente in Form von Federelementen 9 aufweist, die an einem ringförmigen Federträger 91 angebracht sind. Der Federträger 91 kann die Hubscheibe 6 und die Druckscheibe 7 koaxial umschließen, und relativ dazu axial fixiert sein. Die Schnittdarstellung in Figur 12 zeigt die Löseposition wie in Figur 7. Dabei befinden sich die Kippstifte 8 mit ihren Kugelköpfen 81 auf einer Seite im Lagereingriff mit der Lagertasche 73 der Druckscheibe, nicht jedoch mit der Lagertasche 63 der Hubscheibe. Durch das von dem Federträger 91 radial nach innen vorstehende Federelement 9 wird der Kippstift 8 federnd in die Lagertasche 73 gedrückt, wobei der Kippstift gegen die Stützfläche 74 anliegt. Dadurch wird der Kippstift 8 bezüglich der Druckscheibe 7 in einer definierten Ruheposition gehalten. Beim Übergang der Hubbewegung zwischen dem ersten Hubgetriebe, dem Nockengetriebe, und dem Kippstiftgetriebe, ist dadurch sichergestellt, dass die Kippstifte 8 mit dem Kugelkopf sicher und definiert in die Lagertaschen 63 in der Hubscheibe 6 eintauchen und gelagert werden.

Die Federelemente 9 können bevorzugt einstückig mit dem Federträger 91 ausgebildet sein, beispielsweise als Kunststoff-Spritzgussteil, oder als Blechformteil.

Durch das aus den Nocken 61 im Zusammenwirken mit den Tälern 71 der Nockenbahn gebildete erste Hubgetriebe mit dem zweiten Hubgetriebe, welches als Kippstiftgetriebe durch die mit der Hubscheibe 6 und der Druckscheibe 7 zusammenwirkenden Kippstifte 8 gebildet wird, kann eine zweistufige Spannvorrichtung realisiert werden. Das Kippstiftgetriebe hat bevorzugt ein größeres Übersetzungsverhältnis als das erste Hubgetriebe. Das bedeutet, dass bei einer gegebenen Betätigung durch konstante Drehung der Hubscheibe 6 in Fixierrichtung die Klemmbewegung von h1 zu h2 mit größerem Hub, aber geringerer Klemmkraft, und von h2 zu h3 durch das Kippstiftgetriebe mit kleinerem Hub, aber größerer Klemmkraft ausgeführt wird.

Die Anordnung der Kippstifte 8 im Bereich der Nocken 61 und der Täler 71 ist besonders kompakt.

In der Figur 13 ist eine Spanneinrichtung in einer alternativen Ausführungsvariante dargestellt. Die Spannvorrichtung umfasst eine um eine Spannachse S drehbare Hubscheibe 6, die über ein erstes Hubgetriebe, ein zweites Hubgetriebe, ein drittes Hubgetriebe und ein viertes Hubgetriebe mit einer relativ zur Drehung der Hubscheibe 6 feststehenden Druckscheibe 7 verbunden ist, wobei zwischen der Hubscheibe 6 und der Druckscheibe 7 eine Zwischenscheibe 600 angeordnet ist, die gegenüber der Hubscheibe 6 und der Druckscheibe 7 verdrehbar ist, wobei zwischen der Hubscheibe 6 und der Zwischenscheibe 600 das erste und zweite Hubgetriebe angeordnet ist und zwischen der Zwischenscheibe 600 und der Druckscheibe 7 das dritte und vierte Hubgetriebe angeordnet ist, wobei das erste Hubgetriebe ausgebildet ist zur Umsetzung einer relativen Drehung der Hubscheibe 6 in Spannrichtung in einem ersten Betätigungswinkelbereich in einen ersten axialen Hub relativ zur Druckscheibe 7, und das zweite Hubgetriebe ausgebildet ist zur Umsetzung einer auf den ersten Betätigungswinkelbereich folgenden weiteren Drehung der Hubscheibe 6 in einem zweiten Betätigungswinkelbereich in einen zweiten axialen Hub zwischen Hubscheibe 6 und Druckscheibe 7, und das dirtte Hubgetriebe ausgebildet ist zur Umsetzung einer auf den zweiten Betätigungswinkelbereich folgenden weiteren Drehung der Hubscheibe 6 in einem dritten Betätigungswinkelbereich in einen dritten axialen Hub zwischen Hubscheibe 6 und Druckscheibe 7, und das vierte Hubgetriebe ausgebildet ist zur Umsetzung einer auf den dritten Betätigungswinkelbereich folgenden weiteren Drehung der Hubscheibe 6 in einem vierten Betätigungswinkelbereich in einen vierten axialen Hub zwischen Hubscheibe 6 und Druckscheibe 7. Erfindungsgemäß ist zumindest eines der Hubgetriebe als Kippstiftgetriebe ausgebildet ist, mit mindestens einem Kippstift 8, 800 , der sich in Richtung seiner Stiftachse K, K1 zwischen korrespondierenden Lagerstellen 63, 73, 630, 730 an der Hubscheibe 6 und der Zwischenscheibe oder der Zwischenscheibe 600 und der Druckscheibe 7 abstützt.

Wie in der Figur 13 dargestellt, ist das zweite Hubgetriebe und das vierte Hubgetriebe als Kippstiftgetriebe ausgebildet. Das erste und dritte Hubgetriebe ist als Nockengetriebe ausgebildet. Somit sind vier Hubgetriebe in Reihe geschaltet, wobei sowohl die Hubscheibe 6 gegenüber der Zwischenscheibe verdrehbar ist, bis diese aneinander anschlagen und somit diese synchron gegenüber der Druckscheibe 7 verdreht werden, um die Spanneinrichtung aus der Freigabestellung, wie in Figur 13 dargestellt, in die Fixierstellung zu überführen. Es kann vorgesehen sein, dass die maximalen Hübe der einzelnen Hubgetriebe unterschiedlich zueinander sind, oder das die Hübe des ersten und dritten Hubgetriebe gleich sind. Bevorzugt sind die Hübe der Kippstiftgetriebe stets kleiner als die Hübe der übrigen Hubgetriebe. Der Vorteil dieser Anordnung ist, dass eine kompakte Spanneinrichtung mit einem großen Hub bereitgestellt werden kann.

Die Anordnung der Figur 13 lässt sich ebenfalls mit einem Federträger umfassend eine Feder ausrüsten, die die Kippstifte in eine definierte Position halten und/oder vorspannen.

Es ist ebenfalls denkbar und möglich, dass drei der Hubgetriebe als Kippstiftgetriebe ausgebildet sind oder dass alle vier Hubgetriebe als Kippstiftgetriebe ausgebildet sind.

## Patentansprüche

1. Spannvorrichtung (4) für eine Lenksäule (1), umfassend eine um eine Spannachse (S) drehbare Hubscheibe (6), die über ein erstes Hubgetriebe und mindestens ein zweites Hubgetriebe mit einer relativ zur Drehung der Hubscheibe (6) feststehenden Druckscheibe (7) verbunden ist,
wobei das erste Hubgetriebe ausgebildet ist zur Umsetzung einer relativen Drehung der Hubscheibe (6) in Spannrichtung in einem ersten Betätigungswinkelbereich in einen ersten axialen Hub relativ zur Druckscheibe (7), und das zweite Hubgetriebe ausgebildet ist zur Umsetzung einer auf den ersten Betätigungswinkelbereich folgenden weiteren Drehung der Hubscheibe (6) in einem zweiten Betätigungswinkelbereich in einen zweiten axialen Hub zwischen Hubscheibe (6) und Druckscheibe (7),
**dadurch gekennzeichnet,**
**dass** zumindest eines der Hubgetriebe als Kippstiftgetriebe ausgebildet ist, mit mindestens einem Kippstift (8), der sich in Richtung seiner Stiftachse (R) zwischen korrespondierenden Lagerstellen (63, 73) an der Hubscheibe (6) und der Druckscheibe (7) abstützt.

2. Spannvorrichtung nach Anspruch 1, **dadurch gekennzeichnet, dass** das zweite Hubgetriebe als Kippstiftgetriebe ausgebildet ist.

3. Spannvorrichtung nach einem der vorangehenden Ansprüche, **dadurch gekennzeichnet, dass** das Kippstiftgetriebe ein größeres Übersetzungsverhältnis hat als das andere Hubgetriebe.

4. Spannvorrichtung nach einem der vorangehenden Ansprüche, **dadurch gekennzeichnet, dass** die Hubscheibe (6) an einem Antriebselement (42) drehfest angebracht ist.

5. Spannvorrichtung nach einem der vorangehenden Ansprüche, **dadurch gekennzeichnet, dass** die Hubscheibe (6) mit einem Spannbolzen (41) um die Spannachse (S) drehbar drehbar ist.

6. Spannvorrichtung nach einem der vorangehenden Ansprüche, **dadurch gekennzeichnet, dass** das erste Hubgetriebe und das zweite Hubgetriebe koaxial zueinander angeordnet sind.

7. Spannvorrichtung nach einem der vorangehenden Ansprüche, **dadurch gekennzeichnet, dass** die Lagerstellen in die Hubscheibe (6) und/oder die Druckscheibe (7) vertieft eingeformte Lagertaschen (63, 73) aufweisen.

8. Spannvorrichtung nach einem der vorangehenden Ansprüche, **dadurch gekennzeichnet, dass** ein Positionierelement (9) ausgebildet ist zur definierten Positionierung des Kippstifts (8) relativ zur Hubscheibe (6) und/oder zur Druckscheibe (7).

9. Spannvorrichtung nach Anspruch 8, **dadurch gekennzeichnet, dass** das Positionierelement (9) mindestens ein Federelement umfasst, welches den Kippstift (8) federnd gegen die Hubscheibe (6) und/oder die Druckscheibe (7) belastet.

10. Spannvorrichtung nach einem der vorangehenden Ansprüche, **dadurch gekennzeichnet, dass** das Kippstiftgetriebe eine stabile Spannposition aufweist, in welcher die Hubscheibe (6) und die Druckscheibe (7) über den maximalen Hub (h3) des Kippstiftgetriebes hinaus gegeneinander verdreht sind, wobei Anschlagmittel (75) ausgebildet sind, die in der stabilen Spannposition in Umfangsrichtung gegeneinander anschlagen und eine weitere Drehung über die stabile Spannposition hinaus blockieren.

11. Spannvorrichtung nach einem der vorangehenden Ansprüche, **dadurch gekennzeichnet, dass** das erste Hubgetriebe als Kurvengetriebe ausgebildet ist, mit an der Hubscheibe (6) ausgebildeten Nocken (61), welche axial gegen eine an der Druckscheibe (7) ausgebildeten komplementären Kulisse (71) gerichtet sind.

12. Spannvorrichtung nach einem der vorangehenden Ansprüche, **dadurch gekennzeichnet, dass** zwei Hubgetriebe als Kippstiftgetriebe ausgebildet sind.

13. Lenksäule (1), umfassend eine Trageinheit (2) und eine Stelleinheit (3), und mit einer mit der Trageinheit (2) und der Stelleinheit (3) wirkverbundenen Spannvorrichtung (4), die ausgebildet ist, eine Klemmkraft zur Verspannung von Trageinheit (2) und Stelleinheit (3) auszuüben, **dadurch gekennzeichnet, dass** die Spannvorrichtung (4) gemäß einem der Ansprüche 1 bis 12 ausgestaltet ist.

## Claims

1. A clamping apparatus (4) for a steering column (1), comprising a stroke-generating disk (6) which is rotatable about a clamping axis (S) and is connected via a first stroke-generating gearing and at least one second stroke-generating gearing to a pressure disk (7), which is stationary relative to the rotation of the stroke-generating disk (6),
wherein the first stroke-generating gearing is designed to convert a relative rotation of the stroke-generating disk (6) in a first actuating angle range in the clamping direction into a first axial stroke relative to the pressure disk (7), and the second stroke-generating gearing is designed to convert a further rotation of the stroke-generating disk (6) following the first actuating angle range in a second actuating angle range into a second axial stroke between the stroke-generating disk (6) and the pressure disk (7),
**characterized**
**in that** at least one of the stroke-generating gearings is designed as a tilting pin gearing, with at least one tilting pin (8) which is supported in the direction of its pin axis (R) between corresponding bearing points (63, 73) on the stroke-generating disk (6) and the pressure disk (7).

2. The clamping apparatus as claimed in claim 1, **characterized in that** the second stroke-generating gearing is designed as a tilting pin gearing.

3. The clamping apparatus as claimed in either of the preceding claims, **characterized in that** the tilting pin gearing has a larger transmission ratio than the other stroke-generating gearing.

4. The clamping apparatus as claimed in one of the preceding claims, **characterized in that** the stroke-generating disk (6) is attached to a drive element (42) for rotation therewith.

5. The clamping apparatus as claimed in one of the preceding claims, **characterized in that** the stroke-generating disk (6) is rotatable with a clamping bolt (41) rotatably about the clamping axis (S).

6. The clamping apparatus as claimed in one of the preceding claims, **characterized in that** the first stroke-generating gearing and the second stroke-generating gearing are arranged coaxially with respect to each other.

7. The clamping apparatus as claimed in one of the preceding claims, **characterized in that** the bearing points have bearing pockets (63, 73) molded in a recessed manner into the stroke-generating disk (6) and/or into the pressure disk (7).

8. The clamping apparatus as claimed in one of the preceding claims, **characterized in that** a positioning element (9) is designed for the defined positioning of the tilting pin (8) relative to the stroke-generating disk (6) and/or relative to the pressure disk (7).

9. The clamping apparatus as claimed in claim 8, **characterized in that** the positioning element (9) comprises at least one spring element which loads the tilting pin (8) resiliently against the stroke-generating disk (6) and/or the pressure disk (7).

10. The clamping apparatus as claimed in one of the preceding claims, **characterized in that** the tilting pin gearing has a stable clamping position in which the stroke-generating disk (6) and the pressure disk (7) are rotated counter to each other beyond the maximum stroke (h3) of the tilting pin gearing, wherein stop means (75) are formed which, in the stable position, strike against one another in the circumferential direction and block a further rotation beyond the stable clamping position.

11. The clamping apparatus as claimed in one of the preceding claims, **characterized in that** the first stroke-generating gearing is designed as a cam gearing, with cams (61) which are formed on the stroke-generating disk (6) and are directed axially against a complementary slotted guide mechanism (71) formed on the pressure disk (7).

12. The clamping apparatus as claimed in one of the preceding claims, **characterized in that** two stroke-generating gearings are designed as tilting pin gearings.

13. A steering column (1) comprising a supporting unit (2) and an actuating unit (3), and with a clamping apparatus (4) which is operatively connected to the supporting unit (2) and to the actuating unit (3) and is designed to exert a clamping force for bracing the supporting unit (2) and the actuating unit (3), **characterized in that** the clamping apparatus (4) is configured as claimed in one of claims 1 to 12.

## Revendications

1. Dispositif de serrage (4) pour une colonne de direction (1), comprenant un disque à cames (6) pouvant tourner autour d'un axe de serrage (S) et qui est relié par l'intermédiaire d'un premier mécanisme élévateur et d'au moins un deuxième mécanisme élévateur à un disque de pression (7) stationnaire par rapport à la rotation du disque à cames (6),
le premier mécanisme élévateur étant réalisé pour transformer une rotation relative du disque à cames (6) dans la direction de serrage dans une première plage d'angle d'actionnement en une première élévation axiale par rapport au disque de pression (7), et le deuxième mécanisme élévateur étant réalisé pour transformer une autre rotation du disque à cames (6) suivant la première plage d'angle d'actionnement dans une deuxième plage d'angle d'actionnement en une deuxième élévation axiale entre le disque à cames (6) et le disque de pression (7),
**caractérisé en ce qu'**au moins l'un des mécanismes élévateurs est réalisé sous la forme d'un mécanisme à broches basculantes pourvu d'au moins une broche basculante (8) qui prend appui en direction de son axe de broche (R) entre des points d'appui (63, 73) correspondants sur le disque à cames (6) et le disque de pression (7).

2. Dispositif de serrage selon la revendication 1, **caractérisé en ce que** le deuxième mécanisme élévateur est réalisé sous la forme d'un mécanisme à broches basculantes.

3. Dispositif de serrage selon l'une quelconque des revendications précédentes, **caractérisé en ce que** le mécanisme à broches basculantes présente un rapport de transmission supérieur à celui de l'autre mécanisme élévateur.

4. Dispositif de serrage selon l'une quelconque des revendications précédentes, **caractérisé en ce que** le disque à cames (6) est monté sur un élément d'entraînement (42) de manière verrouillée en rotation.

5. Dispositif de serrage selon l'une quelconque des revendications précédentes, **caractérisé en ce que** le disque à cames (6) peut être amené à tourner autour de l'axe de serrage (S) à l'aide d'une goupille de serrage (41) .

6. Dispositif de serrage selon l'une quelconque des revendications précédentes, **caractérisé en ce que** le premier mécanisme élévateur et le deuxième mécanisme élévateur sont disposés de manière coaxiale l'un par rapport à l'autre.

7. Dispositif de serrage selon l'une quelconque des revendications précédentes, **caractérisé en ce que** les points d'appui présentent des poches de palier (63, 73) formées en retrait dans le disque à cames (6) et/ou le disque de pression (7).

8. Dispositif de serrage selon l'une quelconque des revendications précédentes, **caractérisé en ce qu'**un élément de positionnement (9) est réalisé pour le positionnement défini de la broche basculante (8) par rapport au disque à cames (6) et/ou au disque de pression (7).

9. Dispositif de serrage selon la revendication 8, **caractérisé en ce que** l'élément de positionnement (9) comprend au moins un élément faisant ressort qui sollicite la broche basculante (8) de manière élastique contre le disque à cames (6) et/ou le disque de pression (7).

10. Dispositif de serrage selon l'une quelconque des revendications précédentes, **caractérisé en ce que** le mécanisme à broches basculantes présente une position de serrage stable dans laquelle le disque à cames (6) et le disque de pression (7) sont tournés l'un par rapport à l'autre au-delà de l'élévation maximale (h3) du mécanisme à broches basculantes, dans lequel des moyens de butée (75) sont réalisés qui viennent en butée l'un contre l'autre dans la direction circonférentielle dans la position de serrage stable et bloquent toute rotation supplémentaire au-delà de la position de serrage stable.

11. Dispositif de serrage selon l'une quelconque des revendications précédentes, **caractérisé en ce que** le premier mécanisme élévateur est réalisé sous la forme d'une commande à cames pourvue de cames (61) réalisées sur le disque à cames (6) qui sont orientées axialement contre une coulisse (71) complémentaire réalisée sur le disque de pression (7).

12. Dispositif de serrage selon l'une quelconque des revendications précédentes, **caractérisé en ce que** deux mécanismes élévateurs sont réalisés sous la forme de mécanismes à broches basculantes.

13. Colonne de direction (1), comprenant une unité porteuse (2) et une unité de réglage (3), et comprenant un dispositif de serrage (4) en relation fonctionnelle avec l'unité porteuse (2) et l'unité de réglage (3) et qui est réalisé pour exercer une force de serrage pour la mise en contrainte de l'unité porteuse (2) et de l'unité de réglage (3), **caractérisée en ce que** le dispositif de serrage (4) est configuré selon l'une quelconque des revendications 1 à 12.
